# EUROPÄISCHE PATENTSCHRIFT

(11) **EP 0 813 997 B1**
(45) Veröffentlichungstag und Bekanntmachung des Hinweises auf die Patenterteilung: **22.01.2003**
(21) Anmeldenummer: 97107016.4
(22) Anmeldetag: 28.04.1997
(51) Int. Cl.: B60R 11/02

(54) **Verfahren zum Diebstahlschutz elektronischer Geräte eines Fahrzeugs**
Antitheft method for a vehicle electronic apparatus
Procédé de protection contre le vol d'un appareil électronique d'un véhicule

(30) Priorität: 17.06.1996 DE 19624047
(43) Veröffentlichungstag der Anmeldung: 29.12.1997
(73) Patentinhaber: Bayerische Motoren Werke Aktiengesellschaft, 80788 München (DE)
(72) Erfinder: Schneider, Steffen, 80935 München (DE); Wiesmeier, Christian, 81929 München (DE)

(56) Entgegenhaltungen:
- DE-A- 4 014 371
- DE-A- 4 014 725
- DE-A- 19 526 542
- PATENT ABSTRACTS OF JAPAN vol. 018, no. 041 (M-1546), 21. Januar 1994 (1994-01-21) & JP 05 270322 A (FUJITSU TEN LTD), 19. Oktober 1993 (1993-10-19)

## Beschreibung

Die Erfindung bezieht sich auf ein Verfahren gemäß dem Oberbegriff des Patentanspruchs 1, das allgemein bekannt ist.

Bei den elektronischen Geräten handelt es sich beispielsweise um ein Autoradio, einen CD-Wechsler, eine Stereo-Anlage oder beispielsweise auch um ein Multiinformationsdisplay, auf dessen Bildschirm Navigations-Informationen oder aber auch ein aktuelles Fernsehprogramm wiedergegeben wird. Derartige Geräte sind in der Regel sehr hochpreisig und diebstahlgefährdet. Es ist in diesem Zusammenhang speziell bei Autoradios bekannt, dieses bereits herstellerseitig mit einer individuellen Kennung zu versehen und die Inbetriebnahme des Autoradios nur dann zu ermöglichen, wenn fahrzeugintern beispielsweise über eine Tastatur diese Kennung eingegeben wird. Probleme ergeben sich dabei aus dem Handling eines Aufzeichnungsträgers für die einzugebende Ist-Kennung, da erfahrungsgemäß gerade bei längerem Gebrauch des Fahrzeugs und/oder einem Besitzerwechsel der Aufzeichnungsträger verloren geht und der Betrieb des Autoradios von dem Zeitpunkt an nicht mehr möglich ist, zu dem die Ist-Kennung eingegeben werden muß. Dieser Fall liegt dann vor, wenn das Autoradio von fahrzeugintemen Energiespeichern abgetrennt wird.

Der Erfindung liegt die Aufgabe zugrunde, ein Verfahren der eingangs genannten Art zu schaffen, das sich durch eine hohe Betriebssicherheit auszeichnet und das zu seiner Durchführung keinen willkürlichen Eingriff des Fahrzeugbenutzers erfordert.

Die Erfindung löst diese Aufgabe durch die kennzeichnenden Merkmale des Patentanspruchs 1.

Die Soll-Kennung liegt fahrzeugintern jederzeit vor. Handelt es sich bei der Soll-Kennung beispielsweise um die Adresse eines ausgewählten Teilnehmers, so wird diese Adresse jedesmal dann, wenn der Teilnehmer auf dem Datenbus angesprochen wird oder aber wenn entsprechend der Betriebsweise des Datenbus der Teilnehmer ein Datentelegramm auf den Datenbus abgibt, diese Adresse auf dem Datenbus ausgegeben. Es kann sich dabei beispielsweise um die Adresse des Teilnehmers handeln, der nach der ersten Inbetriebnahme des Geräts als erster Teilnehmer auf dem Datenbus sendet bzw. angesprochen wird oder aber der innerhalb einer definierten Zeit von einigen Minuten nach der Inbetriebnahme des Geräts am häufigsten mit seiner Adresse auf dem Datenbus vertreten ist. In jedem Fall ist die Soll-Kennung stets vorhanden. Ihre Eingabe in den Speicher des Geräts erfordert keinerlei Eingriff des Fahrzeugbenutzers. Sie vollzieht sich vielmehr selbsttätig und ohne dessen Zutun. Dasselbe gilt für den Vergleich mit der Ist-Kennung, d. h. mit der Adresse eines Teilnehmer, der nach dem Abspeichern der Soll-Kennung wiederum auf dem Datenbus arbeitet. Auch die Ausgabe der dann als Ist-Kennung geltenden Adresse des Teilnehmers vollzieht sich ohne das Zutun des Fahrzeugbesitzers, sondern läuft wie das Abspeichern der Soll-Kennung für den Fahrzeugbenutzer völlig unbemerkt ab. In jedem Fall handelt es sich bei der Ist- und der Soll-Kennung nicht um die Adresse des Geräts selbst, sondern die Adresse eines nicht mit dem Gerät identischen Datenbus-Teilnehmers.

Die Grundidee des Verfahrens besteht somit darin, im Gerät zu prüfen, ob mindestens ein gültiges Bustelegramm als Ist-Kennung auf dem Datenbus vorliegt. ist das nicht der Fall, ist das Gerät außer Funktion. Dieser Fall tritt beispielsweise dann auf, wenn das Gerät in einem Fahrzeug eines anderen Herstellers eingesetzt wird. Die dort vorliegenden Adressen und/oder Bustelegramme (falls vorhanden) unterscheiden sich in aller Regel von den entsprechenden Kennungen des Herstellers, in dem das Gerät erstmalig eingesetzt wurde und in dem es die Soll-Kennung aufnimmt.

Der Vergleich der Soll- mit der Ist-Kennung kann bei jeder Inbetriebnahme des Geräts oder einmalig nach temporärem Spannungsverlust des Gerätes erfolgen. Da dann jedoch nicht notwendigerweise sofort die Soll-Kennung auf dem Datenbus vorliegt, kann gemäß einer Weiterbildung der Erfindung der Vergleich der beiden Kennungen verzögert vorgenommen werden und während einer entsprechenden Vergleichszeit von einigen Minuten der Betrieb des Geräts auch dann möglich sein, wenn die Ist-Kennung im Gerät noch nicht empfangen wurde. Nach Ablauf dieser Verzögerungszeit jedoch wird das Gerät deaktiviert, sofern die Ist-Kennung auf dem Datenbus nicht vorliegt.

Die Abspeicherung der Soll-Kennung erfolgt, wie bereits ausgeführt, für den Fahrzeugbenutzer unbemerkt. Sie muß jedoch möglichst bald nach der erstmaligen Inbetriebnahme des Geräts vorgenommen werden. Um eventuelle Störungen der als Soll-Kennung abzuspeichernden Adresse zu vermeiden, kann die Abspeicherung der Soll-Kennung beispielsweise erst nach einer definierten Betriebszeit des Geräts von mehreren Minuten und/oder dann vorgenommen werden, wenn die Soll-Kennung mehrmals im Gerät aufgenommen wird. Erforderlich ist hierbei, daß die Teilnehmer-Adresse mehrmals auf dem Datenbus vorliegt und jeweils eindeutig im Gerät identifiziert wird. Durch die dadurch erreichte Redundanz ist eine einwandfreie Form der Soll-Kennung sichergestellt. Es war bisher die Erfindung anhand einer individuellen Teilnehmer-Adresse bzw. eines speziellen Bustelegramms beschrieben worden. Im Rahmen der vorliegenden Erfindung ist es jedoch auch möglich, nicht eine spezielle Adresse oder ein spezielles Bustelegramm als Soll-Kennung zu verwenden, sondern beispielsweise auch eine charakteristische Adress- bzw. Telegrammform. In Fahrzeugen verwendete Datenbusse besitzen jeweils für sich ein charakteristisches Grundmuster ihrer Teilnehmer-Adresse bzw. Bustelegramme. Die Grundmuster der verschiedenen Datenbusse sogar desselben Herstellers für dasselbe Fahrzeug unterscheiden sich jedoch in eindeutiger Weise voneinander. Die Soll-Kennung kann nunmehr auch das anhand der jeweiligen Teilnehmer-Adresse bzw. Bustelegramme charakteristische Grundmuster, das ohne weiteres erkennbar ist, aufnehmen. Es ist dann nicht erforderlich, ein spezielles Bustelegramm bzw. eine spezielle. Teilnehmer-Adresse auf dem Datenbus vorliegen zu haben: Es genügt vielmehr, das erste auf dem Bus nach der Inbetriebnahme des Geräts auftretende Telegramm aufzunehmen und, da es das Grundmuster erhält, als Ist-Kennung auszuwerten. Das Gerät erkennt somit unmittelbar, ob es sich im "richtigen" Datenbus befindet. Damit kann die vorhin angesprochene Verzögerungszeit, innerhalb der das Gerät auch bei nicht bestehender Übereinstimmung von Ist- und Soll-Kennung betrieben wird, reduziert oder möglicherweise sogar aufgehoben werden.

In dieselbe Richtung geht eine alternativer Ausführungsform. Als Soll-Kennung wird dabei nicht eine einzige Teilnehmer-Adresse, sondern eine Reihe von Teilnehmer-Adressen und Bustelegrammen aufgenommen, die nach der erstmaligen Inbetriebnahme des Geräts auf dem Datenbus auftreten. Bei der anschließenden Inbetriebnahme des Geräts werden die dann vorliegenden Bustelegramme und Teilnehmer-Adressen aufgenommen und den gespeicherten Kennungen zugeordnet. Stimmen die gespeicherten mit den anschließend aufgenommenen Kennungen vollständig oder zu einem signifikanten Prozentsatz von beispielsweise 80% überein, so erkennt das Gerät, daß es am richtigen Datenbus angeschlossen ist und es läßt sich dann betreiben. Wird der geforderte Übereinstimmungsgrad nicht erreicht, läßt sich das Gerät nicht aktivieren. Für den Fahrzeugbenutzer bedeutet dies, daß er eine Werkstatt aufsuchen muß, um das Gerät überprüfen und gegebenenfalls einen Diebstahl erkennen zu kennen.

## Patentansprüche

1. Verfahren zum Diebstahlschutz elektronischer Geräte eines Fahrzeugs, mit einem Speicher in einem Gerät und einer darin enthaltenen Soll-Kennung, die mit einer in das Gerät eingebbaren Ist-Kennung verglichen wird und bei dem bei Übereinstimmung der beiden Kennungen das Gerät aktiviert wird,
**dadurch gekennzeichnet,**
**daß** bei dem Gerät, das an einem fahrzeuginternen Datenbus mit mehreren über individuelle Adressen erreichbaren Teilnehmern angeschlossen ist, als Soll-Kennung eine über den Datenbus übertragene Adresse eines Teilnehmers als Soll-Kennung abgespeichert wird und daß bei jeder anschließenden Inbetriebnahme des Geräts diese Soll-Kennung mit den über den Datenbus übertragenen Adressen der Teilnehmer verglichen wird.

2. Verfahren nach Anspruch 1,
**dadurch gekennzeichnet,**
**daß** bei der Inbetriebnahme des Geräts der Vergleich der Soll-Kennung mit den Adressen während einer Zeitspanne vorgenommen wird, in der das Gerät auch bei noch nicht bestehender Übereinstimmung der Soll-Kennung mit der Ist-Kennung aktiviert bleibt.

3. Verfahren nach Anspruch 1 oder 2,
**dadurch gekennzeichnet,**
**daß** die Abspeicherung der Soll-Kennung erst nach einer Mindest-Betriebszeit des Geräts vorgenommen wird.

4. Verfahren nach einem der Ansprüche 1 bis 3,
**dadurch gekennzeichnet,**
**daß** als Soll-Kennung eine für den Datenbus charakteristische Adressform abgespeichert wird.

5. Verfahren nach einem der Ansprüche 1 bis 4,
**dadurch gekennzeichnet,**
**daß** als Soll-Kennung mehrere spezielle Teilnehmer-Adressen verwendet werden.

## Claims

1. An antitheft method for a vehicle electronic apparatus comprising a memory in an apparatus and a reference identification contained in said memory, which reference identification is compared with an actual identification which can be entered in the apparatus, and by which method the apparatus is activated in case of agreement between the two identifications, **characterised in that** an address of a participant transmitted via the data bus is stored as the reference identification in the apparatus, which is connected to a data bus located in the vehicle and containing a plurality of participants reachable via individual addresses, and **in that** on each subsequent operation of the apparatus this reference identification is compared with the addresses of the participants transmitted via the data bus.

2. A method according to claim 1, **characterised in that** when the apparatus is operated the comparison of the reference identification with the addresses is carried out during a time period in which the apparatus remains activated even when agreement of the reference identification with the actual identification does not yet exist.

3. A method according to claim 1 or 2, **characterised in that** the storing of the reference identification is carried out only after a minimum operating time of the apparatus.

4. A method according to any one of claims 1 to 3, **characterised in that** a form of address characteristic of the data bus is stored as the reference identification.

5. A method according to any one of claims 1 to 4, **characterised in that** a plurality of particular participant addresses are used as the reference identification.

## Revendications

1. Procédé de protection antivol d'appareils électroniques d'un véhicule comportant une mémoire dans un appareil et une caractéristique d'identification de consigne contenue dans la mémoire, cette caractéristique étant comparée à la caractéristique réelle introduite dans l'appareil et en cas de concordance, l'appareil est activé,
**caractérisé en ce que**
l'appareil est raccordé par un bus de données interne au véhicule à plusieurs participants que l'on atteint par des adresses individuelles, comme caractéristique de consigne, on a enregistré une adresse d'un participant transmise par le bus de données et constituant une caractéristique de consigne, et à chaque mise en route suivante de l'appareil, cette caractéristique de consigne est comparée aux adresses des participants transmises par le bus de données.

2. Procédé selon la revendication 1,
**caractérisé en ce que**
pour la mise en route de l'appareil on compare la caractéristique de consigne aux adresses pendant une durée au cours de laquelle l'appareil reste activé même lorsqu'il n'y a pas encore de concordance entre la caractéristique d'identification de consigne et la caractéristique d'identification réelle.

3. Procédé selon la revendication 1 ou 2,
**caractérisé en ce que**
l'enregistrement en mémoire de la caractéristique d'identification de consigne se fait seulement après une durée de fonctionnement minimale de l'appareil.

4. Procédé selon l'une des revendications 1 à 3,
**caractérisé en ce que**
pour l'enregistrement de la caractéristique d'identification de consigne on enregistre une forme d'adresse caractéristique pour le bus de données.

5. Procédé selon l'une des revendications 1 à 4,
**caractérisé en ce que**
comme caractéristique d'identification de consigne, on utilise plusieurs adresses spéciales de participants.
